# EUROPEAN PATENT SPECIFICATION

(11) **EP 0 931 222 B1**
(45) Date of publication and mention of the grant of the patent: **06.08.2003**
(21) Application number: 97944235.7
(22) Date of filing: 10.09.1997
(51) Int. Cl.: F04D 9/04

(54) **PROCEDURE FOR THE STARTING UP OF PUMPS**
VERFAHREN ZUM STARTEN VON PUMPEN
PROCEDURE DE MISE EN MARCHE DE POMPES

(30) Priority: 08.10.1996 SE 9603659
(43) Date of publication of application: 28.07.1999
(73) Proprietor: Vingraen AB, 641 97 Katrineholm (SE)
(72) Inventor: Vingraen AB, 641 97 Katrineholm (SE)
(86) International application number: SE9701522
(87) International publication number: WO98015738

(56) References cited:
- NL-A- 8 601 817

## Description

The present invention is concerned with a procedure for starting up a pump for the movement of liquid, which pump is not capable of drawing liquid up to itself at start-up when located significantly above the body of liquid from which it is to pump, but can act as self-sucking once it has begun pumping liquid. It is often necessary in practice for a pump to be located above a body of liquid, so that the pump must draw liquid up to itself through a feed line, because bodies of liquid are for natural reason often situated at a lower level than their surroundings and because solutions involving an immersed pump or a pump located in a basement alongside or below the body of liquid (thus providing gravity feed) are expensive and advanced solutions which are suitable only for permanent installations, and then only with electric motor as prime mover. In the case of a large mobile pump powered by an internal combustion engine, location at a level that would allow gravity feed is impossible in most cases.

Pumps are well-know which are capable of pumping air or other gas and hence of drawing up liquid from a lower level at start-up. Examples of such pumps are various forms of piston pump, screw pump etc. A common feature of such pumps is that they are precisely constructed, with highly finished interior surfaces which slide against each other so as to ensure gas tightness. The drawback of these self-priming pumps is that they are ill-suited to liquids contaminated with e.g. grit, soil, grass, straw etc., as the said sliding surfaces are easily damaged, thus destroying the pump's gas pumping capability. Other service conditions that damage the sliding surfaces are cavitation and dry running, whereof the latter often generates heat.

A class of pumps which is particularly simple, inexpensive and suitable for use with highly contaminated liquid such as are found in agriculture, civil construction, street cleaning etc., is the so-called turbo-pumps, being based on a hydrodynamic principle and lacking the aforesaid sliding surfaces. The variant known as the centrifugal pump is particularly popular. The said turbo-pumps can indeed function as self-sucking once they are filled with liquid and the gas initially present in them has been expelled. However, they normally cannot pump gas so as to draw liquid up into themselves from a lower level in the start-up phase. A conventional method of solving this problem is to fit a non-return valve at the lower end of the pump's feed line and to fill the pump and the feed line with liquid from above. This is done once only when the pump is first started up.

The said procedure is cumbersome and is particularly ill-suited to mobile pump applications where the feed pipe must be continually emptied (such is the case, for example, if the pump is mounted on a tanker and is used to fill the tank at one location, then to empty it at a second location, then to fill it again at the first location, etc.). Another problem that often arises in intermittent operation in a fixed location is that impurities in the liquid are deposited in the non-return valve and prevent it from sealing perfectly when the pump is at rest, as a result of which the pump has emptied of liquid by the next time it has to be started.

The patent publication NL―A―8601817 discloses a device for irrigation of farmland comprising a centrifugal pump and a suction pipe, by means of which water can be drawn from a ditch. An auxiliary pump is connected to the lower end of the suction pipe above a foot valve and is arranged to fill the volute casing of the centrifugal pump with water during start-up of the device. After start-up, the auxiliary pump can be switched off and the pumped water passes through the foot valve.

A main object of the present invention is to provide a tractor driven pump device for the movement of liquid, wherein the total capacity is higher than in prior art devices, and where cavitation in a feedline will be counteracted. Another object of the present invention is to solve the above-mentioned problems in pumps which are not capable of drawing liquid up into themselves at start-up when elevated significantly above the body of water from which they are to pump, primarily because of there inadequate capacity to pump air.

The invention provides a solution to these problems and is defined by the characterising part of claim 1.

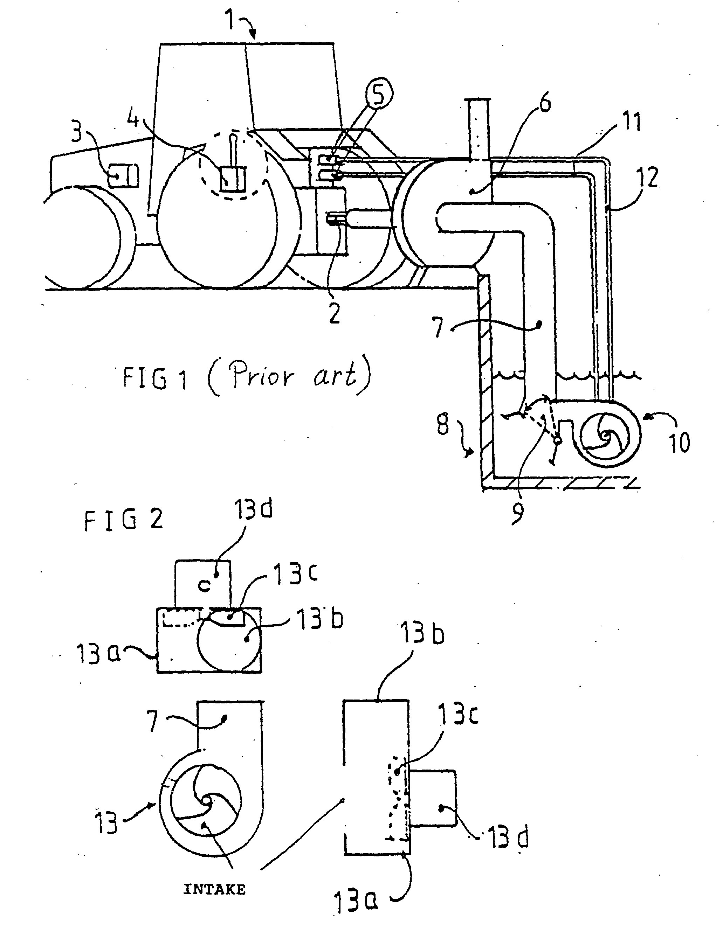

The procedure according to prior art is more particularly explained with reference to an example of embodiment (see Fig. 1). To an agricultural tractor (1, Fig. 1), which is equipped as standard with a power take-off shaft (2) for mechanical power transmission from the tractor's internal combustion engine and with a hydraulic system comprising oil tank, hydraulic pump (3) powered by the said internal combustion engine, valves (4), and quick-release couplings for an external hydraulic system (5) there is connected via the power take-off shaft a large centrifugal pump (6) of 25-50 kW driving power, whose feed line (7) extends down into the liquid tank (8). At the lower end of the feed line there is fitted a simple, more or less tight-sealing non-return valve (9) and an immersible centrifugal pump (10) powered by a hydraulic motor and having its discharge above the non-return valve, said centrifugal pump obtaining its hydraulic fluid from the tractor's built-in hydraulic system via either one of hoses (11) or (12) (the other hose serving as the return line for the hydraulic fluid). Before starting up the centrifugal pump (6), the centrifugal pump (10) is started first, whereupon the non-return valve (9) closes to downward flow and the feed line (7) and the centrifugal pump (6) fill up with liquid. Then the centrifugal pump (6) is started up with the aid of the tractor s power take-off shaft, whereupon the non-return valve (9) opens and the hydraulically powered pump (10) may be switched off if desired. The procedure has been put into practice in a number of trials and has been found to work excellently. The pumps may also be started in the reverse order to that mentioned above. In the event of cavitation in the feed line or some other condition causing the pump (6) to "lose hold", it is very easy to restart by a simple manipulation of the tractor's hydraulic valves (4).

In practice there are many circumstances that make the procedure according to the above an advantageous one. A hydraulically powered immersed pump with sufficient capacity to quickly fill the feed line (7) and the pump (6) can be made very simple, inexpensive and easily handled (weighing just a few kilograms). The power source is in many cases available at low cost, since the internal combustion engine (most often a diesel engine) required to drive the large pump connected to the power take-off shaft is manufactured in very large series for vehicular applications and in such cases is equipped as standard, or at least prepared to be equipped, with a small hydraulic pump for various servo systems attached to the intended vehicle.

The pumpdevice according to the invention will now be described. A specially designed centrifugal pump (13, Fig.2), driven by a hydraulic motor (13d), is fit at the lower end of the feed line (7, Fig.1), which pump replaces both the pump (10, Fig. 1) and the non-return valve (9, Fig. 1), in which case all the pumped liquid passes through said pump (13). In a generalised procedure according to the invention it is often desirable, for reasons of efficiency of power transmission and ease of handling, to make the immersed hydraulically powered pump small compared to the pump that is powered directly by the internal combustion engine. Therefore the pump (13) must be designed to transmit a considerably greater flow of liquid than it would be capable of pumping itself. This is achieved by making the pump housing (13a, Fig. 2) and its discharge opening (13b) considerably wider than the impeller (13c). A solution as described above wherein all the pumped liquid passes through the pump (13) also permits said pump to operate continuously, thus helping to increase the total capacity and prevent cavitation in the feed line.

## Claims

1. A tractor driven pump device for movement of liquid, comprising:
- a centrifugal pump (6) powered by said tractor (1) via a power take-off shaft (2),
- a lower pump (13) driven by hydraulic fluid from a hydraulic pump (3) powered by said tractor (1),
- a feed line (7) interconnecting said centrifugal pump (6) and said lower pump(13), said pump (13) being connected to an intake end portion of said feed line.
- wherein said lower pump (13) is arranged to be immersed in said liquid to fill said feed line (7) and said centrifugal pump (6) with liquid at start-up,
**characterised in that**
- said lower pump (13) is a centrifugal pump, and **in that**
- the lower pump (13) being so designed, that during continuous operation of the pump device, all liquid pumped through the intake end portion of said feed line (7) will pass through said lower pump (13).

2. A pump device according to claim 1, wherein said lower pump (13) comprises a pump housing (13a), a discharge opening (13b), and an impeller (13c), and wherein said pump housing and said discharge opening are considerably wider than said impeller.

3. A pump device according to claim 1 or 2, wherein said lower pump (13) obtains its hydraulic fluid from a built-in hydraulic system of said tractor (1)

## Patentansprüche

1. Eine traktorangetriebene Pumpvorrichtung zur Förderung von Flüssigkeiten, bestehend aus:
- einer Zentrifugalpumpe (6), angetrieben durch den genannten Traktor (1) über eine Zapfwelle (2),
- einer unteren Pumpe (13), angetrieben durch Hydrauliköl von einer vom Traktor (1) angetriebenen Hydraulikpumpe (3),
- einer Förderleitung (7), welche die Zentrifugalpumpe (6) mit der unteren Pumpe (13) verbindet, wobei die untere Pumpe (13) an ein Einlassendteil der genannte Förderleitung (7) angeschlossen ist,
- wobei die untere Pumpe (13) in die genannte Flüssigkeit eingetaucht ist, um die Förderleitung (7) und die Zentrifugalpumpe (6) beim Anlauf mit Flüssigkeit zu füllen,
**charakterisiert dadurch, dass**
- die untere Pumpe (13) eine Zentrifugalpumpe ist, und
- die untere Pumpe (13) so konstruiert ist, dass bei Dauerbetrieb der Pumpvorrichtung die gesamte, durch den Einlassendteil der Förderleitung (7) gepumpte Flüssigkeit durch die untere Pumpe (13) strömt.

2. Eine Pumpvorrichtung gemäß Patentanspruch 1, wobei die genannte untere Pumpe (13) ein Pumpengehäuse (13a), einen Auslass (13b) und ein Flügelrad (13c) besitzt, und das genannte Pumpengehäuse und der genannte Auslass wesentlich breiter sind als das genannte Flügelrad.

3. Eine Pumpvorrichtung gemäß Patentanspruch 1 und 2, wobei die genannte untere Pumpe (13) ihr Hydrauliköl von einer eingebauten Hydraulikanlage des genannten Traktors (1) erhält.

## Revendications

1. Dispositif pour le pompage de liquides, entraîné par un tracteur, comprenant:
- une pompe centrifuge (6) entraînée par le tracteur (1) par l'intermédiaire d'une prise de force (2),
- une pompe de relevage (13) actionnée par le liquide hydraulique mis en mouvement par une pompe (3) entraînée par le tracteur (1),
- un conduit d'alimentation (7) reliant la pompe centrifuge (6) à la pompe de relevage (13), celle-ci étant raccordée sur l'extrémité d'entrée du conduit
- et prévue pour fonctionner immergée dans le liquide afin d'assurer le remplissage du conduit d'alimentation (7) et de la pompe centrifuge (6) à la phase de démarrage.
**caractérisé par le fait que**
- la pompe de relevage (13) est une pompe centrifuge et que
- cette pompe (13) est conçue de telle sorte que, lors de l'utilisation de manière continue du dispositif de pompage, la totalité du liquide pompé via le raccord d'entrée du conduit (7) traverse ladite pompe (13).

2. Dispositif pour le pompage de liquides selon le critère 1, **caractérisé par le fait que** la pompe de relevage (13) est constituée d'une volute (13a), d'un raccord de refoulement (13b) et d'une roue (13c), la volute et le raccord de refoulement étant de dimensions nettement supérieures à celles de la roue.

3. Dispositif pour le pompage de liquides selon le critère 1 ou 2, **caractérisé par le fait que** la pompe de relevage (13) est entraînée par le liquide hydraulique mis en mouvement par un système hydraulique intégré au tracteur (1).
